# EUROPEAN PATENT APPLICATION

(11) **EP 2 339 833 A1**
(43) Date of publication of application: **29.06.2011**
(21) Application number: 09014413.0
(22) Date of filing: 18.11.2009
(51) Int. Cl.: H04N 5/445

(54) **Media handling system for unified media browsing**

(71) Applicant: Unitymedia NRW GmbH, 50933 Köln (DE)
(72) Inventor: Dlugosch, Peter, 50933 Köln (DE)
(74) Representative: Appelt, Christian W.

(57) **Abstract**

The present application comprises a media handling system comprising a set top box (18) being configured to access various media assets containing audio, still image and/or video content from different media sources (12, 14); said set top box (18) being further configured to provide said audio, still image and/or video content to an output device (28) and to cause said output device (28) to display a graphical user interface (32) providing the user with access to and information on all the media assets through a single graphical user interface.

## Description

### Technical field

The present invention relates to the field of media handling and browsing with the aid of graphical user interfaces. More specifically, the present invention relates to a media handling system having a set top box for unified media browsing.

### Background art

Known media handling systems allow the user/viewer to access different media assets through different user interfaces, which, depending on the media asset to be accessed, may vary significantly regarding their navigational structure and their representation of the various media assets.

The user/viewer is thus not presented with an intuitive navigational structure and may not be able to locate the media assets of particular interest, at least not within an acceptable time span.

It is therefore an object of the present invention to provide an improved media handling system which allows the user to identify and access media assets more quickly and more reliably.

### Disclosure of the invention

The present invention relates to a media handling system comprising a set top box being configured to access various media assets containing audio, still image and/or video content from different media sources. Said set top box is further configured to provide said audio, still image and/or video content to an output device and to cause said output device to display a graphical user interface providing the user with access to and information (such as content description, format, etc.) on all the media assets through a single unified graphical user interface. The user is thus able to quickly and reliably locate and access those media assets which are of particular interest to him using a single, unified graphical user interface.

According to a preferred embodiment, the media handling system may further comprise said output device.

According to a preferred embodiment, the set top box may be configured to access media assets via different physical transmission media and/or different transmission protocols.

According to a preferred embodiment, the set top box may comprise a dual band tuner, wherein the set top box is configured to integrate a picture-in-picture video of a TV channel of interest in the graphical user interface being displayed on the output device, while the video of the currently tuned channel is being displayed in the background of the graphical user interface. By including this pre-view feature in the user interface, the user may locate media assets of particular interest to him even more quickly and reliably.

According to another preferred embodiment, the set top box may comprise an access layer that is capable of accessing various media assets from different media sources.

According to another preferred embodiment, the media handling system may further comprise a hard disk. The hard disk may be used to generate background animations in the graphical user interface by playing back a video sequence from the hard disk. In this way, additional processing and memory resources previously required to generate those animations within the set top box itself can be dispensed with. Preferably, the set top box may further comprise video and audio decoders being used to play back the video sequence from the hard disk. According to a preferred embodiment, page transitions may be animated by playing back a video sequence from the hard disk.

According to a preferred embodiment, each of the available media assets may be presented in the graphical user interface in an image-based representation thereby helping the user to identify media assets of interest.

According to a preferred embodiment, a component of the graphical user interface may be a zapping banner providing an interactive banner.

According to a preferred embodiment, the graphical user interface may comprise an electronic program guide providing a navigation structure covering multiple TV channels.

According to a preferred embodiment, the set top box may be coupled with the output device via a unidirectional or a bidirectional interface, the latter providing a two-way communication link between the user and the set top box via the graphical user interface being displayed on the output device.

### Brief description of the figures

Figure 1 shows an overview of a media handling system 10 according to the present invention;
Figures 2 to 6 show various aspects related to the graphical user interface 32 used by the media handling system 10 according to the present invention.

### Detailed description

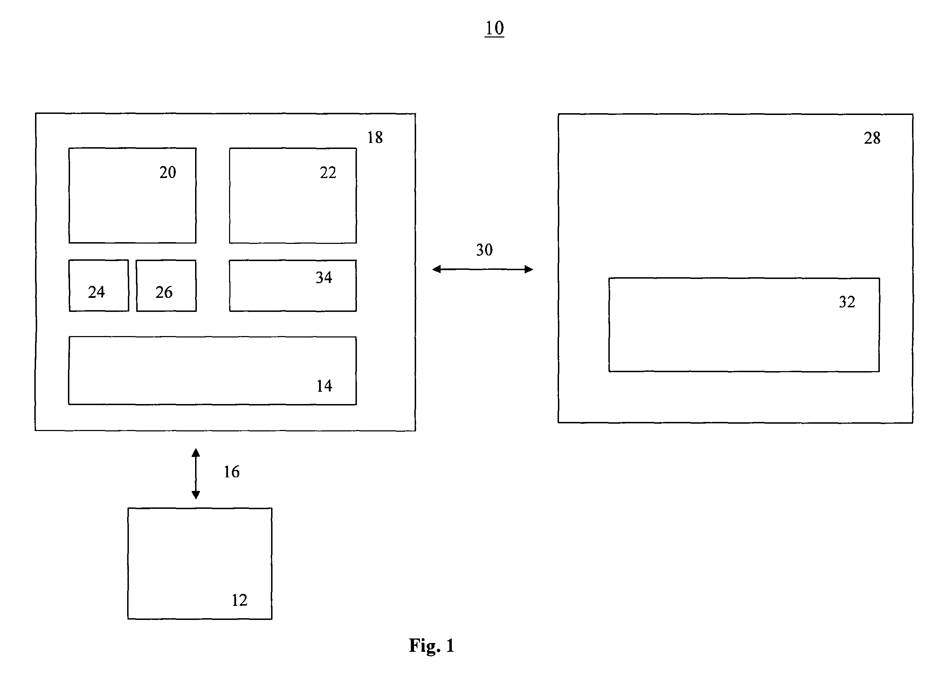

Figure 1 shows an exemplary system 10 for browsing and accessing various media assets such as video content, audio content, still pictures etc. The media assets may originate from different media sources 12, such as TV channels, video on demand services, a local area network, the internet, USB sticks, an external hard disk connected via USB, or a hard disk 14 functioning as a personal video recorder (PVR). To access those media sources 12, the system 10 may use different physical transmission media 16 such as twisted-pair cable, coaxial cable, Ethernet cable, USB sticks, wireless and the like and may rely on different transmission protocols such as TCP/IP, DVB, USB and the like.

The system 10 comprises a set top box 18 wherein the set top box 18 comprises a central processing unit (CPU) 20 and a local memory 22. The set top box 18 further comprises a video decoder 24 and an audio decoder 26 either of which being implemented in hardware, software, firmware or a mixture thereof.

As indicated in figure 1, the hard disk 14 forms part of the set top box 18.

The set top box 18 is coupled with an output device 28 in the form of a screen via an interface 30. The screen 28 further comprises speakers (not shown).

The system 10 is configured to enable the user to access and browse different media assets via a graphical user interface (GUI) 32 which is displayed on the screen 28.

Various aspects of how the user may access and browse through the various media assets by means of the graphical user interface 32 will now be described:
The graphical user interface 32 implements the concept of a unified media browser in which the process of consulting and managing different media assets such as TV programs, video on demand assets, (digital) radio, personal video recordings, home pictures, home music, home videos and internet media such as video, images, music and the like is handled through a single, unified and consistent user interface (i.e. the media browser). This is accomplished by representing the various media assets in a uniform, rectangular, image-based media item representation. Navigating through these media items and selecting a desired media item representing a certain media asset is handled by putting these items into horizontal and/or vertical lists that can be combined into horizontal or vertical tables. The tables are then either presented to the viewer in overlay on top of the video which is displayed on the screen 28, or completely occupying the screen 28 or in combination with a scaled down version of the video being watched on the screen 28.

The overall combination of these lists represents the navigation structure for the viewer by means of which different media assets can be accessed. The navigation structure can be dynamically adapted by the operator.

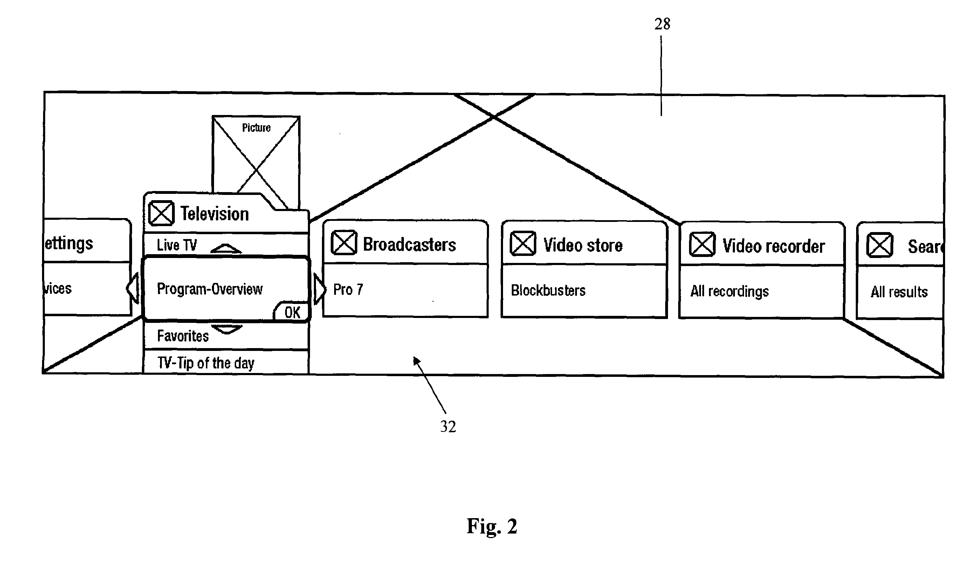

An example of the graphical user interface 32 overlaid on top of the video content being currently watched is shown in figure 2. As shown therein, different media assets from various media sources are represented by image-based media items. The user, being confronted with an ever-increasing number of media-assets and media-sources, may therefore access those assets and sources via a single, unified GUI.

As shown in figure 2, the graphical user interface 32 has been designed in such a way that the viewer is immediately presented with the next level in the navigational hierarchy when consulting a current level. In this way, the number of clicks can be reduced thereby decreasing the navigation path to the final content selection.

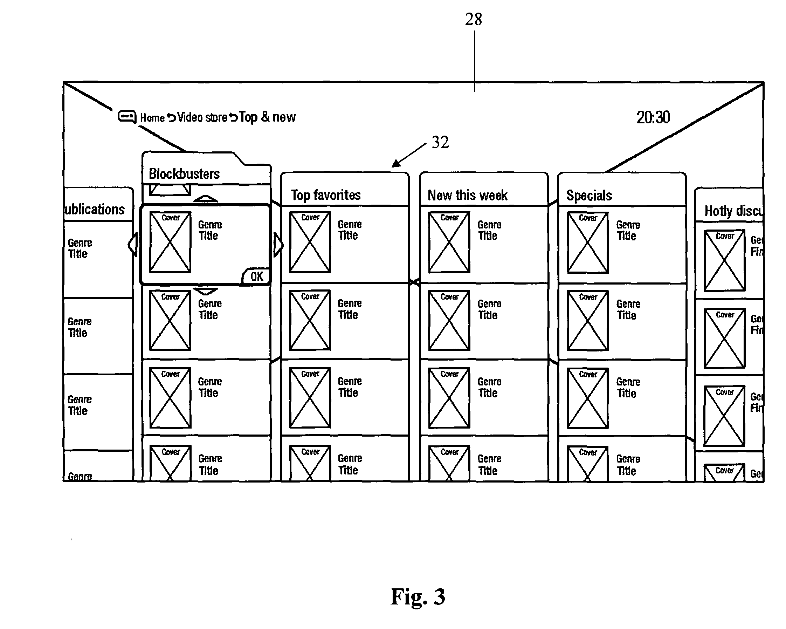

Figure 3 shows another example of a GUI 32 based on a unified representation of media assets and media sources according to the present invention. Similar to the one shown in figure 2, the GUI 32 shown in figure 3 presents immediately two navigational levels at the same time in order to further reduce the number of clicks and decrease navigation paths to the final content.

Thus, the GUI 32 according to the present invention relates to a merging of sources of media assets and media asset representations in the GUI 32 as if available in a single, joint catalogue or database. The underlying implementation of the unified GUI 32 in the form of system 10 and, more specifically, set top box 18 therefore includes an access layer that is capable of accessing the different media sources 12 and transmission media 16. The underlying implementation of the unified GUI 32, i.e. system 10, further includes means for decoding the different transmission protocols 16 and for merging the different assets into a common data base as well as for representing this database in a unified way to the viewer.

Thereby, the system 10 is capable of supporting a large number of media assets coming from various different media sources 12, while providing the user with a unified interface for accessing those media assets/sources. Therefore, advantages of the present invention are scalability and ease-of-use.

Another aspect of the present invention relates to creating background animations generated by playing back a predefined video clip from the hard disk 14 (PVR). Showing animations in the GUI 32 is challenging since the CPU 20 and memory 22 of the set top box 18 are limited in performance and capacity. According to the present invention, a similar animation experience is achieved by playing back a video in the background instead of using the typical GUI animation rendering techniques, which are very CPU-/memory consuming.

In this way, animations can even be supported on set top boxes 18 having very limited memory and CPU resources. The core (hardware) components 24, 26, i.e. the video and audio decoders, of the set top box 18 are used to play back the predefined video clip from hard disc 14.

Using the same mechanism, page transitions can also be animated.

According to the present invention, content is being transformed into media images that are consistently being manipulated and browsed on by the viewer. This is done by merging a widget image with widget data into a new image that is then transmitted to and rendered by the set top box 18. In this way, the set top box 18 is only used as a rendering device, while the data manipulation is offloaded to e.g. a media server. According to a generalisation of this widget idea, images and data are merged at the server side and are then sent as a composed image to the set top box 18. Thus, the set top box 18 does not have to be aware of the data handling but merely acts as an image rendering device. This server side image blending could, for instance, be implemented in a thin client frame work.

The set top box 18 further includes a logging service, implemented in either hardware, software and/or firmware. The logging service can be used to generate log messages and can then be used to analyse viewer behaviour statistics. By means of the hard disk 14 or a video on demand service it is possible for the viewer to watch media assets at any time he wants. To provide operators, content owners and, for instance, advertisers with statistical information related to the number of viewers that are consuming a specific media asset, the set top box 18 differentiates between real time and media time in its logging service. Real time is the time at which a media asset is consumed by the viewer. Media time is the time at which the media asset is acquired by the set top box 18. Statistical information is then gathered in relation to a specific media asset and the time difference between acquisition of this media asset by the set top box 18 and actual consumption of this media asset by the viewer.

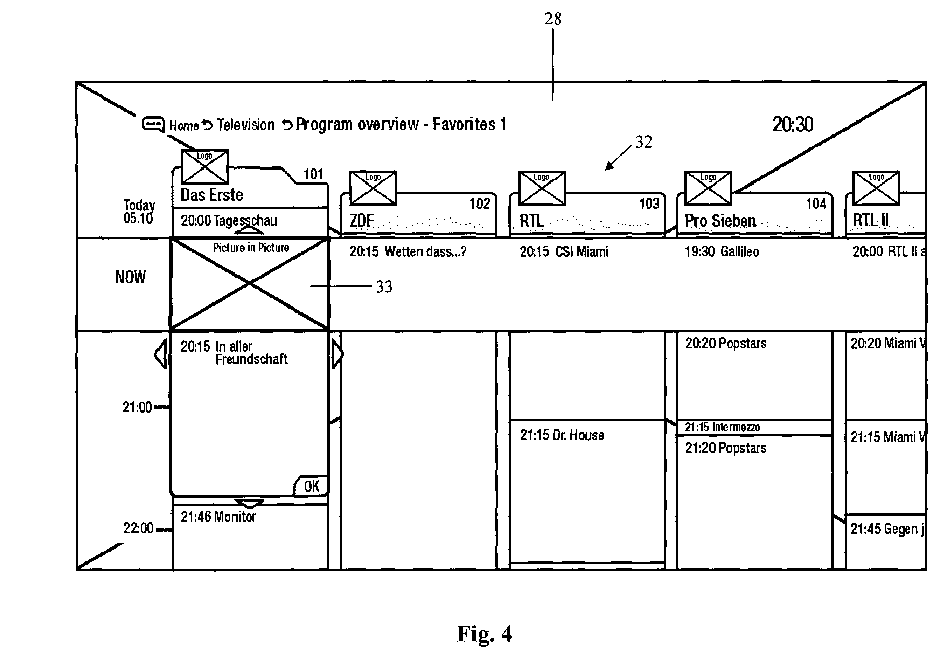

Figure 4 shows another aspect of the present invention. The graphical user interface 32 having the navigation structure discussed above is shown in figure 4, wherein a picture-in-picture video 33 of a channel of interest is displayed within the graphical user interface 32, while, in the background of the graphical user interface 32, the video of the currently tuned channel is being displayed. To facilitate this feature, the set top box 18 comprises a dual band tuner 34 having a dual tuner feature, which allows the set top box 18 to receive two different channels simultaneously. In another embodiment, a triple-band tuner may be used to allow the user to preview additional channels.

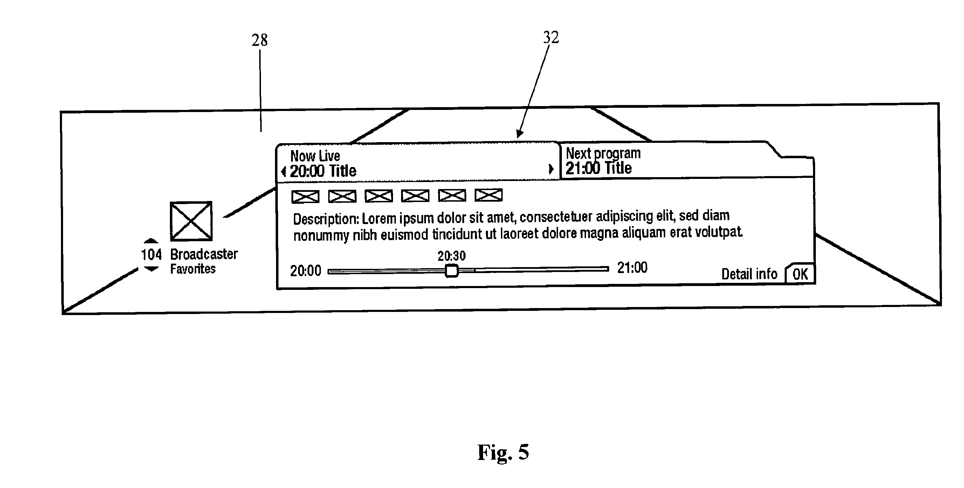

Another embodiment of the present invention is shown in figure 5. Therein, a zapping banner is a component of the GUI 32 that is displayed when the user is zapping through the service list. The zapping banner according to the present invention is an interactive banner through which the viewer can consult additional information, such as the title of the next event, pastevents available on catch-up TV, current and next events on other channels, selecting of favourite zapping lists, etc. In case of video on demand, it even gives access to the video on demand catalogue.

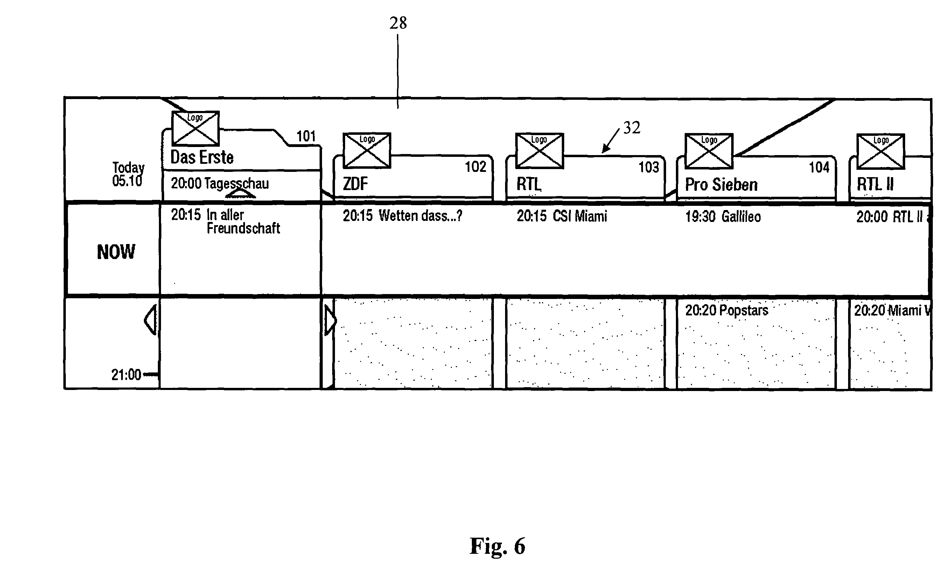

The graphical user interface 32 shown in figure 6 lists the various channels along the horizontal axis and segments the available content into time slots displayed along the vertical axis. In this way, the relative time scale is kept correct except for the currently broadcasted events, which are displayed with a minimum height. This is realised by assigning a fixed height to the current minute in the timescale. This is done in oder to keep live events readable even if just a short time is remaining and to present the viewer a natural layout which can be easily understood by the viewer. According to another aspect of the present invention, when the viewer navigates through the graphical user interface 32, data loading is done in an asynchronous way resulting in a graphical user interface 32 presenting the viewer with the relevant information while making maximum use of the typically limited CPU resources of the set top box 18.

## Claims

1. Media handling system comprising
a set top box (18) being configured to access various media assets containing audio, still image and/or video content from different media sources (12, 14);
said set top box (18) being further configured to provide said audio, still image and/or video content to an output device (28) and to cause said output device (28) to display a graphical user interface (32) providing the user with access to and information on all the media assets through a single graphical user interface.

2. Media handling system according to claim 1, wherein the set top box (18) comprises a dual band tuner (34,) , wherein the set top box (18) is configured to integrate a picture-in-picture video (33) of a TV channel of interest in the graphical user interface (32) being displayed on the output device (28), while the video of the currently tuned channel is being displayed in the background of the graphical user interface (32).

3. Media handling system according to claim 1 or 2, further comprising said output device (28).

4. Media handling system according to claim 1, 2 or 3, wherein the set top box (18) is configured to access media assets via different physical transmission media (16) and/or different transmission protocols.

5. Media handling system according to one of the preceding claims, wherein the set top box (18) comprises an access layer that is capable of accessing various media assets from different media sources (12, 14).

6. Media handling system according to one of the preceding claims, further comprising a hard disk (14).

7. Media handling system according to claim 6, wherein background animations in the graphical user interface (32) are generated by playing back a video sequence from the hard disk (14).

8. Media handling system according to claim 7, wherein the set top box (18) further comprises video and audio decoders (24, 26) being used to play back the video sequence from the hard disk (14).

9. Media handling system according to claims 6 to 8, wherein page transitions are animated by playing back a video sequence from the hard disk (14).

10. Media handling system according to one of the preceding claims, wherein each of the available media assets is presented in the graphical user interface (32) in an image-based representation.

11. Media handling system according to one of the preceding claims, wherein a component of the graphical user interface (32) is a zapping banner providing an interactive banner.

12. Media handling system according to one of the preceding claims, wherein the graphical user interface (32) comprises an electronic program guide providing a navigation structure covering multiple TV channels.

13. Media handling system according to one of the preceding claims, wherein the set top box (18) is coupled with the output device (28) via a bidirectional interface (30).
